# EUROPEAN PATENT SPECIFICATION

(11) **EP 3 459 404 B1**
(45) Date of publication and mention of the grant of the patent: **11.11.2020**
(21) Application number: 18195561.8
(22) Date of filing: 19.09.2018
(51) Int. Cl.: A47J 31/44

(54) **BEVERAGE PREPARATION DEVICE**
GETRÄNKEZUBEREITUNGSVORRICHTUNG
DISPOSITIF DE PRÉPARATION DE BOISSON

(30) Priority: 21.09.2017 CN 201721213553 U; 26.09.2017 CN 201721241530 U
(43) Date of publication of application: 27.03.2019
(73) Proprietor: NingBo LvZhiPin Electrical Appliance Science and Technology Co., Ltd, Ningbo City, Zhejiang Province 315400 (CN)
(72) Inventor: LU, Dingyao, Ningbo City, Zhejiang 315400 (CN); YUAN, Chao, Ningbo City, Zhejiang 315400 (CN); LI, Xiaojian, Ningbo City, Zhejiang 315400 (CN)
(74) Representative: 2K Patentanwälte Blasberg Kewitz & Reichel

(56) References cited:
- EP-A1- 2 484 252
- EP-A1- 3 192 409
- CN-B- 103 271 651

## Description

### TECHNICAL FIELD

The present disclosure relates to a beverage preparation device.

### BACKGROUND

The beverage preparation device generally brews a capsule containing a solid granule by a pressurized fluid, and prepares a beverage by rapid dissolution of the solid granule, which is gradually favored by consumers in the market. Beverage preparation device often includes a closing mechanism to open or close a brewing chamber in which the capsule is located. However, in order to realize the opening and closing of the brewing chamber, the beverage preparation device has a complicated closing mechanism and a large number of components, which results in high cost and reduces extensive application of the beverage preparation device.

EP 2 484 252 A1 discloses a capsule extraction mechanism comprising a capsule holder and a capsule hydraulic tank, a capsule cover and a drive assembly, an upper guide rail, two opposite push plate brackets, and at least one pulling hook. However, a propulsion compensation mechanism that is configured to push the push plate on the capsule holder is not disclosed.

EP 2 484 252A1 discloses a machine for preparing beverages by infusion. And CN 103 271 651 B discloses a coffee capsule clamping and discharging mechanism. However, a propulsion compensation mechanism that is configured to push the push plate on the capsule holder when the closing mechanism makes the push plate cover on the capsule holder to improve the sealing property between the capsule holder and the push plate, is not disclosed in either one.

### SUMMARY

The present disclosure provides a new beverage preparation device, which includes a closing mechanism with fewer components and lower cost. It has a wide application prospect.

The present disclosure provides a beverage preparation device. The beverage preparation device includes an extraction head, the extraction head comprises a frame, a capsule holder, and a push plate and a closing mechanism. The capsule holder is disposed on the frame. The push plate covers the capsule holder. A brewing chamber is formed between the push plate and the capsule holder. And the closing mechanism is connected to the push plate, wherein the closing mechanism includes a flap, a crank, a connecting assembly, and a push shaft fixedly connected to the push plate. The crank is disposed on the flap, the connecting assembly is rotatably connected to the crank. And when the flap is moved, the push shaft moves relative to the capsule holder, to seal or open the brewing chamber. The push plate includes at least one lancet extending into the brewing chamber, and the at least one lancet is configured to pierce a capsule located in the brewing chamber. The extraction head further includes a propulsion compensation mechanism, the propulsion compensation mechanism is configured to push the push plate on the capsule holder. The advancement compensation mechanism includes a first housing and a second housing. The first housing is extended upward from a side of the push plate which is away from the capsule holder. The second housing covers the first housing and is connected to the push plate. The first housing and the second housing form a sealed chamber. A water inlet is disposed on the second housing and configured for connecting to a water injection pipe. The at least one lancet passes through the first housing and extends towards the capsule holder. The first housing further includes a unidirectional pressure-holding seal assembly which is disposed in a connecting passage between the lancet and the sealed chamber. And the unidirectional pressure-maintaining seal assembly is configured for one-way water injection and maintaining pressure.

In a preferred embodiment, the closing mechanism includes a pair of rotating convex structure and a rotating shaft, the pair of rotating convex structure are symmetrically disposed on one end of the flap, the frame includes a pair of support portion, the rotating shaft is disposed through the rotating convex structure and one end of the crank and fixed to the pair of support portion, and the other end of the crank is connected to the connecting assembly.

In a preferred embodiment, the crank is vertically disposed on the flap, and the crank and the flap form an integrity.

In a preferred embodiment, the connecting assembly includes a first connecting rod, a second connecting rod and a connecting rod shaft. The first connecting rod is separated from the second connecting rod and both located on two sides of the crank, and rotatably connected to the connecting rod shaft.

In a preferred embodiment, the beverage preparation device includes a limit block disposed on the frame and located adjacent to back side of the first connecting rod or the second connecting rod, and the limit block is configured to limit angle between the first connecting rod and the crank or between the second connecting rod and the crank.

In a preferred embodiment, a top of the at least one lancet for piercing the capsule has a shape of bevel.

In a preferred embodiment, the beverage preparation device includes a capsule gasket which is located on a surface of the push plate facing the capsule holder, and the capsule gasket is configured to seal the brewing chamber.

In a preferred embodiment, the beverage preparation device includes two sleeves symmetrically fixed on the push plate, and two ends of the push shaft are respectively disposed inside the two sleeves, to achieve fixation between the push shaft and the push plate.

In a preferred embodiment, the frame is provided with a micro switch fixed on the frame and configured for controlling electrical circuit of water injection to turn off. A paddle is fixed on one of the pair of rotating convex structure. And the paddle is disposed adjacent to the micro switch and configured to trigger the micro switch.

In a preferred embodiment, the unidirectional pressure-maintaining seal assembly comprises a pressure maintaining screw screwed in top wall of the first housing and located at up end of the connecting passage, a check valve seal head, and a check valve spring, the pressure maintaining screw comprises a hole, the check valve seal head is located adjacent to the hole, and one end of the check valve spring is connected to the check valve seal head to block the hole, and the other end of the check valve spring is fixed to bottom wall of the first housing.

In a preferred embodiment, the extraction head further includes a reset spring, one end of the reset spring is connected to the closing mechanism, and the other end of the reset spring is connected to the first housing.

In a preferred embodiment, the propulsion compensation mechanism further includes a stop pin which is fixed to the second housing and slidable relative to the first housing by a predetermined distance.

In summary, the beverage preparation device provided by the present disclosure has simple structure. Especially, the closing mechanism of the beverage preparation device is simple and easily installed. And it has low cost. Furthermore, users can easily open and close the closing mechanism because of the principle of leverage and is convenient in operation.

### BRIEF DESCRIPTION OF THE DRAWINGS

Fig. 1 is a sectional view of the beverage preparation device of the first embodiment.
Fig. 2 is a schematic structural view of the extraction head of the beverage preparation device of Fig. 1.
Fig. 3 is another schematic structural view of the extraction head of Fig. 2 in another viewing angle.
Fig. 4 is a sectional view of the extraction head of Fig. 2 along line A-A'.
Fig. 5 is a schematic structural view of the push plate and the capsule holder of the extraction head of Fig. 2.
Fig. 6 is a schematic structural view of the push plate of Fig. 2.
Fig. 7 is another schematic structural view of the push plate of Fig. 6 in another viewing angle.
Fig. 8a is a schematic structural view of the lancet of the push plate of Fig. 7.
Fig. 8b is a sectional view of the lancet of Fig. 8a.
Fig. 8c is another schematic structural view of the lancet of Fig. 8a in another viewing angle.
Fig. 9 is another schematic structural view of the extraction head (omitting the frame, the limit blocks, the limit rod, the micro switch) of Fig.2.
Fig. 10 is a schematic structural view of the closing mechanism of the extraction head of Fig.2.
Fig. 11 is another schematic structural view of the closing mechanism of Fig. 10 in another viewing angle.
Fig. 12 is another schematic structural view of the extraction head (omitting the frame, the limit rod, the micro switch) of Fig.2.
Fig. 13 is another schematic structural view of the extraction head (omitting the frame, the limit blocks, the micro switch) of Fig.2 in another viewing angle.
Fig. 14 is a schematic structural view of the extraction head (omitting the frame) of the beverage preparation device of the second embodiment.
Fig. 15 is a sectional view of the extraction head of Fig.14.
Fig. 16 is another sectional view of the extraction head of Fig.14 in another viewing angle.
Fig. 17 is a schematic structural view of part of the extraction head of Fig.14.

### DETAILED DESCRIPTION

Next, a detailed explanation will be given for exemplary embodiments with reference to the drawings. In the following description of the drawings, a same or like reference sign is given to a same or like part. The drawings schematically represent configurations according to the exemplary embodiments of the present invention. Furthermore, the exemplary embodiments of the present invention described below are examples and may be modified as appropriate as long as the nature of the present invention is not altered.

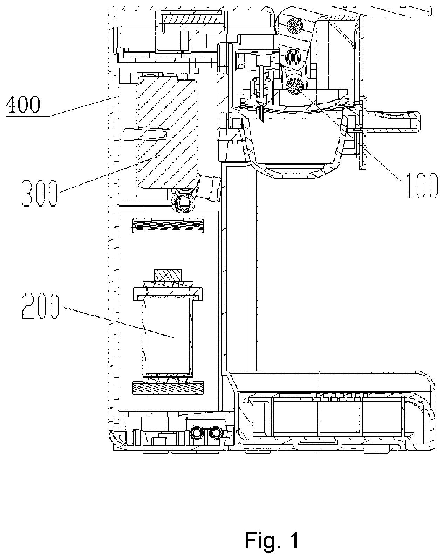

Referring to Fig. 1, a beverage preparation device 101 of the first embodiment is provided. The beverage preparation device 101 can be used for preparing a beverage brewed from a plurality of solid granules. When a relatively high-temperature water stream is injected a brewing chamber including a plurality of solid granules, the plurality of solid granules would be dissolved under high-temperature and high-pressure water stream and a beverage is brewed.

The beverage preparation device 101 can be used for preparing a drink like coffee. The beverage preparation device 101 can be a capsule coffee machine. Alternatively, the beverage preparation device 101 can be used for preparing other beverages made from solid granules such as milk, soy milk, and milk tea. Additionally, the liquid for brewing the solid granule is not limited to water, and can be other liquids such as milk, black tea, and bone soup selected if needed.

The beverage preparation device 101 can include an extraction head 100, a water pump 200, a heating element 300, and a shell 400. The extraction head 100 is fixed to the shell 400. The water pump 200 and the heating element 300 are housed in the sell 400. The water pump 200 is connected to the heating element 300. When the beverage preparation device 101 is in operation, the water pump 200 is configured to pump water from a water tank (not shown) to the heating element 300, the water is heated by the heating element 300, and then the heated water is injected into the extraction head 100 to make the plurality of solid granules dissolve.

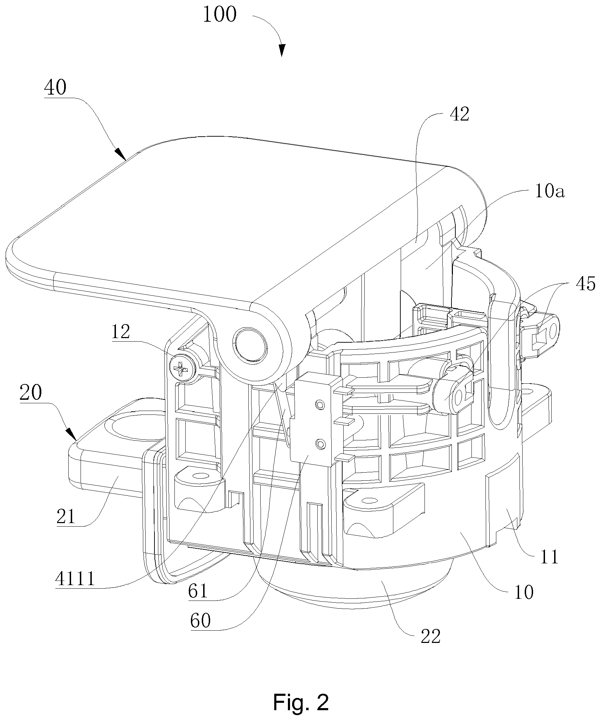

Referring to Fig. 2 to Fig. 4, the extraction head 100 includes a frame 10, a capsule holder 20, a push plate 30 and a closing mechanism 40. The capsule holder 20 is disposed on the frame 10. The push plate 30 covers the capsule holder 20. A brewing chamber (not labeled) is formed between the push plate 30 and the capsule holder 20. And the closing mechanism 40 is connected to the push plate 30.

The frame 10 can be configured to support the capsule holder 20, the push plate 30, and the closing mechanism 40. The capsule holder 20 can be configured to support a capsule containing the plurality of solid granules. The push plate 30 can be used to seal the capsule holder 20. The closing mechanism 40 can be used to make the push plate 30 move to open and close the brewing chamber. When the beverage preparation device 101 is in operation, the push plate 30 is moved by the closing mechanism 40 and the plurality of solid granules located in the brewing chamber can be dissolved by the high temperature and high pressure water flow.

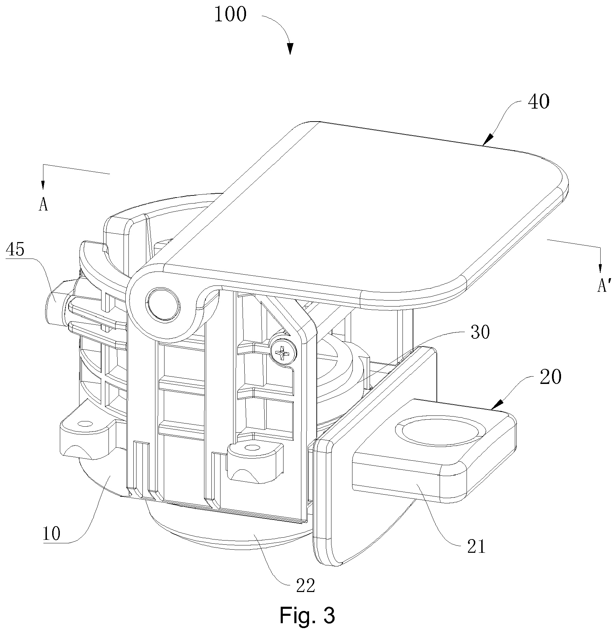

The extraction head 100 can be fixed to the shell 400 by the frame 10. Referring to Fig. 2 and Fig. 3, the capsule holder 20, the push plate 30, and the closing mechanism 40 can be fixed to the frame 10. The frame 10 includes a first magnet 11. The first magnet 11 can be configured to magnetically adsorb the capsule holder 20, thereby fixing the capsule cup holder 20 to the holder 10 and aligning the position of the capsule holder 20.

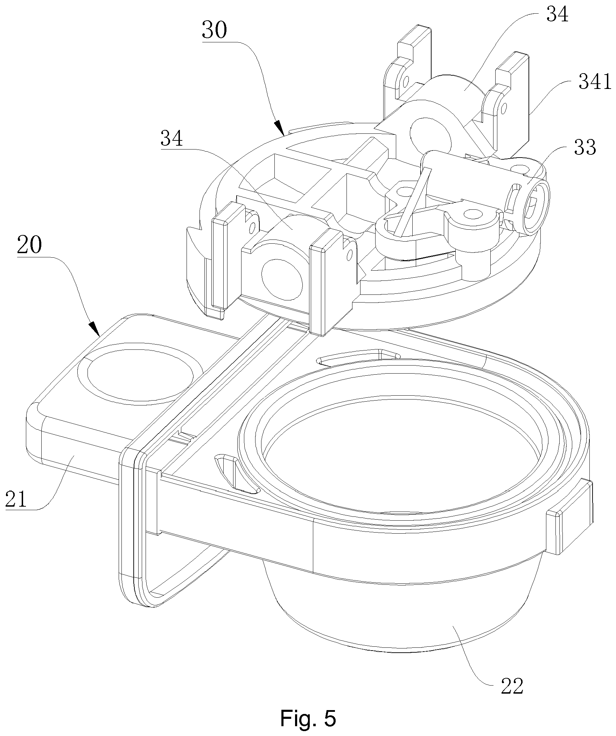

Referring to Fig. 5, the capsule holder 20 includes an operation panel 21 and a cup holder 22 connected to the operation panel 21. The cup holder 22 can substantially be in a shape of bowl, and a space inside thereof can accommodate the capsule containing the plurality of solid granules. At least one hole (not shown) can be disposed on the bottom of the cup holder 22. The brewed beverage can flow out of the beverage preparation device 101 through the at least one hole.

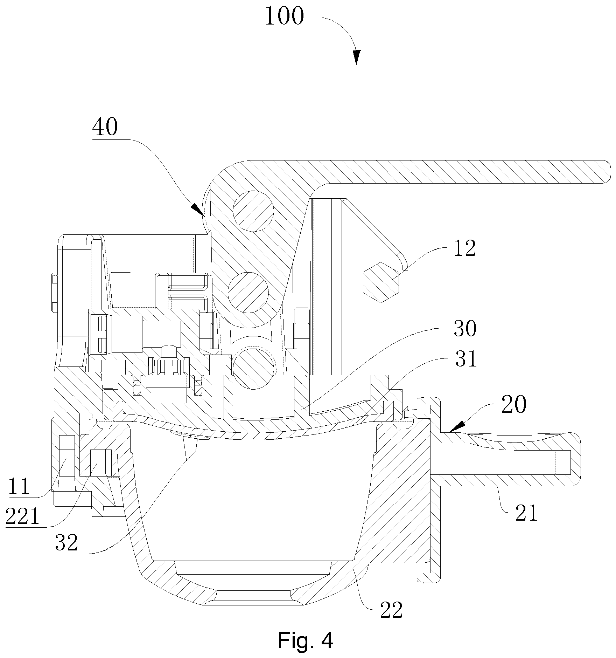

Referring to Fig. 4, the second magnet 221 is disposed on the sidewall of the cup holder 22 far away from the operation panel 21. The second magnet 221 is configured to cooperate with the first magnet 11. The cup holder 22can be fixed on the support 10 via magnetic attraction between the first magnet 11 and the second magnet 221.

The capsule holder 20 are detachably connected to the frame 10 by embedding and magnetic adsorption. The user can disassemble the capsule holder 20 to assemble the capsule when using the beverage preparation device 101. Besides, the operation panel 21 can be gripped by the user when detaching the capsule holder 20.

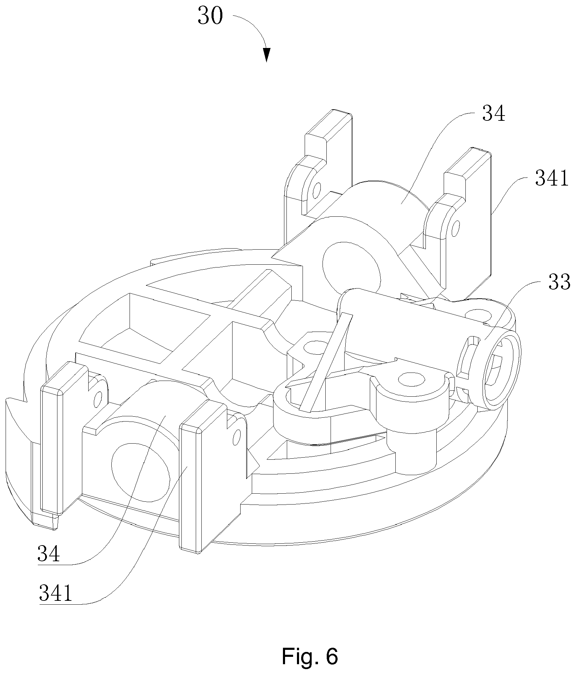

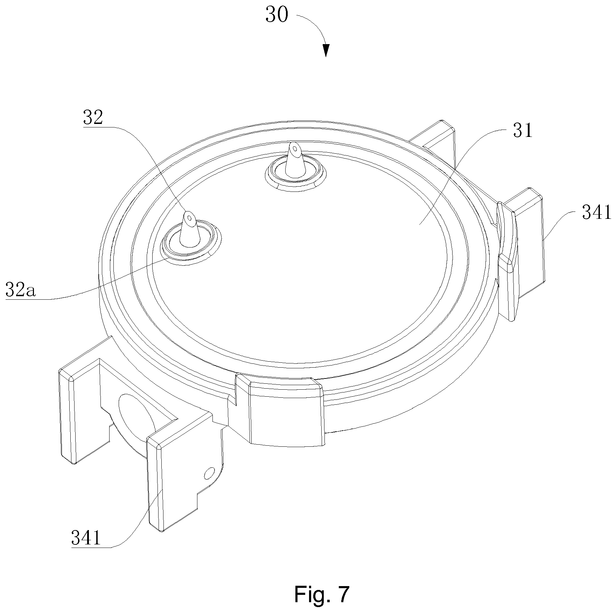

Referring to Fig. 6 and Fig. 7, the push plate 30 is substantially in a shape of a disk. The push plate 30 can cover the capsule holder 20 to form the brewing chamber. A capsule gasket 31 is fixedly disposed on a surface of the push plate 30 towards the capsule holder 20 and configured to seal the brewing chamber. The push plate 30 can includes at least one lancet 32 that passes through the capsule gasket 31, and the at least one lancet 32 can pierce the capsule with the movement of the push plate 30, so that a high-temperature water flow for brewing can enter the capsule, thereby dissolving the plurality of solid granules. An inlet pipe 33 is further provided and fixed to the push plate 30. And the inlet pipe 33 is configured to connect the external water source with the at least one lancet 32 and supplying a relatively high temperature and high pressure water flow.

In the present embodiment, the push plate 30 includes two lancets 32 to increase the dissolution rate of the plurality of solid granules. Alternatively, the number of the lancets 32 may also be one or two, and the more the number of lancets 32 is, the faster the dissolution rate of the plurality of solid granules has.

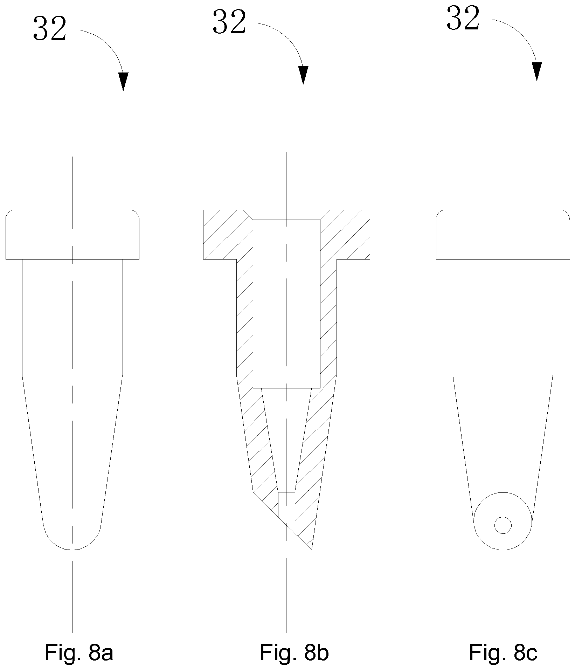

Referring to Fig. 8a, 8b and 8c, a center of the lancet 32 has a conical waterway (not labeled) with a decreasing size from upward to downward. A conical water path having a higher pressure and a faster flow rate can be formed, improving the blocking and dissolving efficiency of the plurality of solid granules.

A top of the at least one lancet 32 for piercing the capsule has a shape of bevel, so that the at least one lancet 32 can be smoothly separated from the capsule after piercing the capsule.

In the present embodiment, the at least one lancet 32 is eccentrically aligned with the capsule. That is, the at least one lancet 32 does not align the center of the capsule, and the lancet 32 and the capsule are eccentrically disposed, and the at least one lancet 32 can easily pierce into the capsule.

Referring to Fig. 7a, a lancet sealing element 32a is further provided between the at least one lancet 32 and the capsule gasket 31, in order to seal the gap between the at least one lancet 32 and the capsule gasket 31, so as to avoid the brewed beverage leaking from the gap.

Referring to Fig. 6, the push plate 30 further includes two sleeves 34. Two sleeves 34 is symmetrically disposed and configured to connect the closing mechanism 40. The push plate 30 can move following the movement of the closing mechanism 40.

Furthermore, a guide rail 341 is respectively disposed on both sides of the sleeve 34, and the guide rail 341 is coupled with a groove (not shown) disposed on the frame 10 for guiding the movement of the push plate 30. So the movement of the push plate 30 under the driving of the closing mechanism 40 is easy and stable.

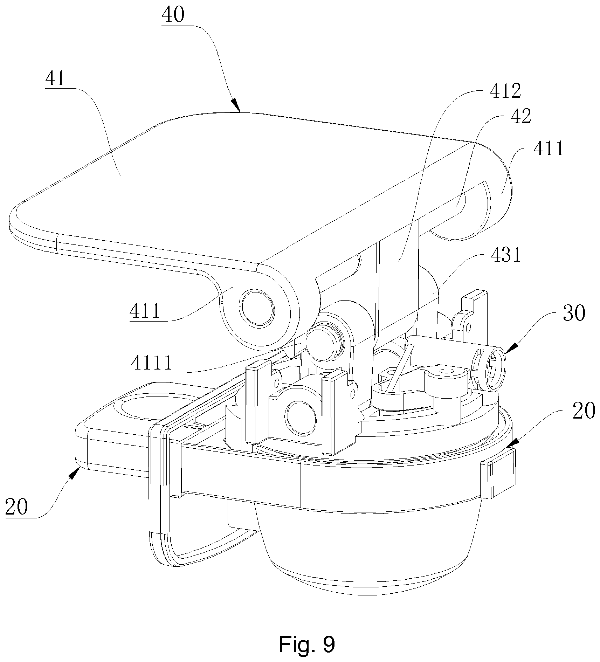

Referring to Fig. 9 to Fig. 11, the closing mechanism 40 includes a flap 41, a rotating shaft 42, a connecting assembly 43 and a push shaft 44. The rotating shaft 42 passes through the flap 41 and is coupled to the frame 10. The connecting assembly 43 is connected to the flap 41. Both ends of the push shaft 44 pass through the sleeve 34 and are connected to the connecting assembly 43. The flap 41 is operated directly by the user, and the rotating shaft 42 is as an axis of rotation of the flap 41. The connecting assembly 43 is configured to make the push shaft 44 move under the movement of the flap 41, resulting in the push plate 30 moving. That is, when the user operates the flap 41, the push shaft 44 will move via the connecting assembly 43. Then the push plate 30 will moves upwards and downwards under the movement of the push shaft 44.

The flap 41 can substantially be in a shape of flat plate. The closing mechanism 40 further includes a pair of rotating convex structure 411. The pair of rotating convex structure 411 are symmetrically disposed on an end of the flap 41 and sleeved on the rotating shaft 42. A crank 412 is disposed between the pair of rotating convex structure 411 and extends towards the connecting assembly 43. The rotating shaft 42 passes through one end of the crank 412. The other end of the crank 412 are connected to the connecting rod assembly 43. When the user operates the flap 41, the crank 412 can make the connecting assembly 43 move.

Referring to Fig. 2 and Fig. 9, the rotating shaft 42 passes through the pair of rotating convex structure 411 and the crank 412. The rotating shaft 42 is embedded on the frame 10 by a pair of support portion 10a, thereby fixing the closing mechanism 40 to the frame 10. The rotating shaft 42 is regarded as a rotation axis of the flap 41, and the flap 41 can freely rotate around the rotating shaft 42.

In the present embodiment, the crank 412 and the flap 41 can be an integrity. In another option, the crank 412 and the flap 41 can be split structure, and the crank 412 may be fixed to the flap 41 by welding, riveting, gluing, etc.

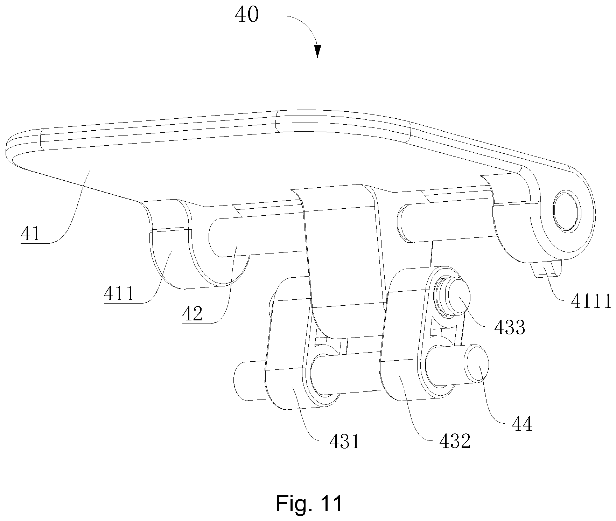

Referring to Fig. 11, the connecting assembly 43 can be a first-stage link transmission, which includes two links named as a first connecting rod 431 and a second connecting rod 432 respectively. The first connecting rod 431 and the second connecting rod 432 are disposed on two sides of the crank 412. One ends of the first connecting rod 431 and the second connecting rod 432 are sleeved with a connecting rod shaft 433 , and the other ends of the first link 431 and the second link 432 are sleeved with the push shaft 44. That is, the connecting rod shaft 433 sequentially passes through the first connecting rod 431, the crank 412 and the second connecting rod 432. So the first connecting rod 431 and the second connecting rod 432 can move upwards and downwards with the movement of the flap 41, resulting in the push shaft 44 moving upwards and downwards.

Both ends of the push shaft 44 are respectively disposed inside the two sleeves 34, in order to achieve the interconnection between the push plate 30 and the closing mechanism 40.

The rotation of the flap 41 about the rotating shaft 42 will drive the crank 412 to rotate. And the rotation of the crank 412 will drive the first connecting rod 431 and the second connecting rod 432 to move upwards and downwards, resulting in the push shaft 44 moving upwards and downwards. Thereby the push plate 30 connected to the push shaft 44 will move upwards and downwards to achieve sealing and separation between the push plate 30 and the capsule holder 20.

When the push plate 30 seals the capsule holder 20, the at least one lancet 32 will penetrate into the capsule, and the plurality of solid granules in the capsule are brewed by the high temperature and high pressure hot water, and the prepared beverage passes through the hole of the bottom of the capsule holder 20 finally.

During the preparation of the beverage, the rotating shaft 42 is always in a stationary state on the extraction head 100, so that when the flap 41 is turned over, the rotating convex structure 411 and the crank 412 can rotated about an axis of the rotating shaft 42. Further, the crank 412 is vertically disposed at one end of the flap 41 and fixed to the flap 41 so that a lever is formed between the crank 412 and the flap 41, so that it will take a smaller force to turn over the flap 41, achieving the crank 412 being driven by a larger force, which is convenient for the user.

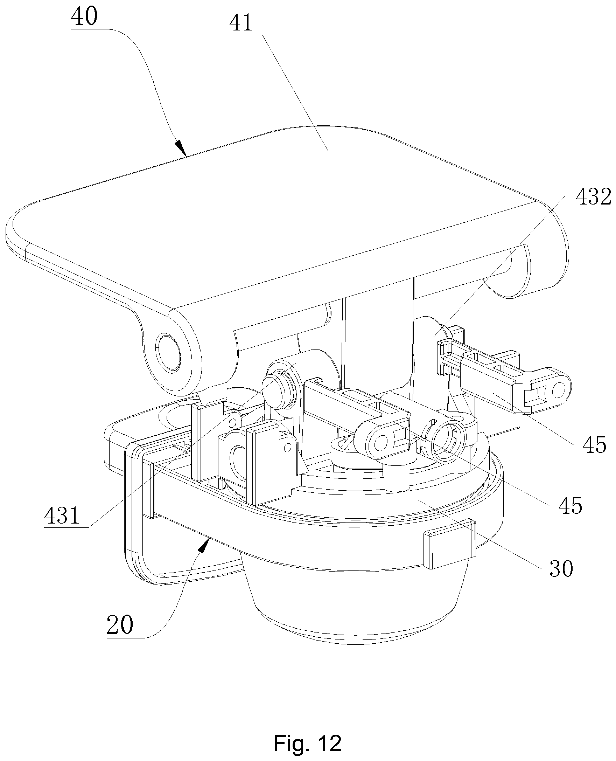

Referring to Figs. 2, 3, 10, and 12, two limit blocks 45 are fixed to the frame 10 and located adjacent to back sides of the first connecting rod 431 and the second connecting rod 432 respectively. The limit blocks 45 are configured to limit angles between the first connecting rod 431 and the crank 412 and between the second connecting rod 432 and the crank 412 respectively. In the processing of resetting the flip 41 and closing the brewing chamber, the first connecting rod 431 and the second connecting rod 432 move backwards until the back sides of the first connecting rod 431 and the second connecting rod 432 attach the limit blocks 45, then the flap cannot move and reach a self-locking state.

The two limit blocks 45 cooperate with each other to realize the limitation of the angles between the first connecting rod (431) and the crank (412) and between the second connecting rod (432) and the crank (412) respectively. Thereby, the flap 41 can be stable in a self-locking state.

Alternatively, the number of the limit block 45 can be one. That is, a limit block 45 is fixed to the frame 10 and located adjacent to back sides of the first connecting rod 431. The limit block 45 can be configured to limit a angle between the first connecting rod 431 and the crank 412.

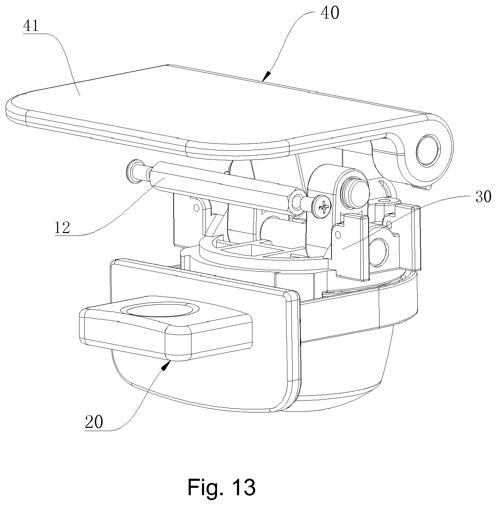

Referring to Fig. 4 and Fig. 13, a limit rod 12 is provided in order to limit a maximum rotate angle of the flip 41. The limit rod 12 is disposed on a side of the frame 10 far away from the limit blocks 45. Both ends of the limit rod 12 are embedded and fixed on the frame 10. Referring to Fig. 13, in the process of turning over the flip 41 and opening the brewing chamber, the first connecting rod 431 and the second connecting rod 432 move forwards until front sides of the first connecting rod 431 and the second connecting rod 432 attach the limit rod 12, then the flap cannot move and reach a maximum flip state. The rotate angle of the flip 41 reaches the maximum.

When the closing mechanism 40 drives the push plate 30 to open relative to the capsule holder 20, the brewing chamber which is specifically used for brewing the plurality of solid granules of the capsule will be in an open state, and it is not suitable for brewing with boiling water. Therefore, the beverage preparation device 101 further includes a water injection protection mechanism. When the brewing chamber is in an open state, even if the water injection switch on the device is pressed, water cannot be flowed into the brewing chamber because of the water injection protection mechanism.

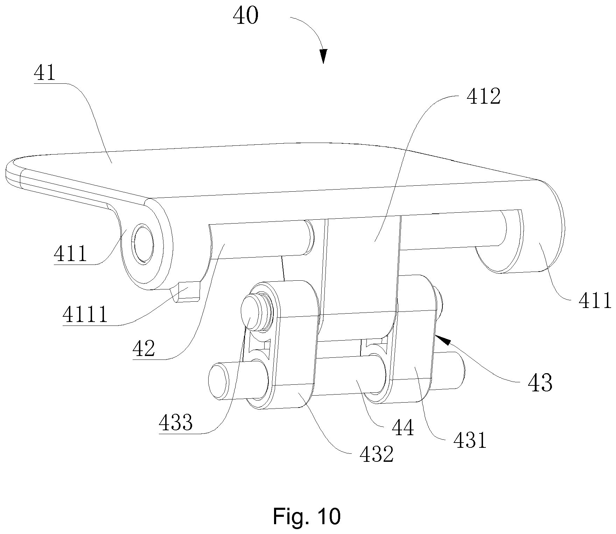

Referring to Fig. 2 and Fig. 10, the water injection protection mechanism includes a micro switch 60 configured for water injection protection, and the micro switch 60 is mounted on the frame 10 and includes a trigger 61. A paddle 4111 is fixed on one of the pair of the rotating convex structure 411, and the paddle 4111 is disposed adjacent to the trigger 61 of the micro switch 60. When the trigger 61 of the micro switch 60 is triggered, the micro switch 60 can control electrical circuit of water injection to turn off.

In the process of turning over the flap 41, the rotating convex structure 411 can rotate and opening the brewing chamber, and at the same time, the trigger 61 of the micro switch 60 can be triggered by the paddle 4111. When returning the flap 41 and closing the brewing chamber, the paddle 4111 does not attach the trigger 61 of the micro switch 60, that is, the water injection protection mechanism does not work, then the water can flow into the brewing chamber.

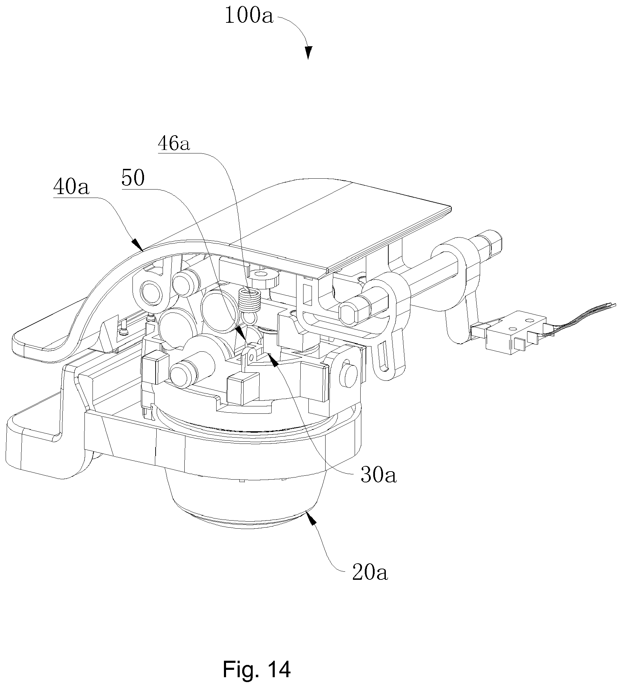

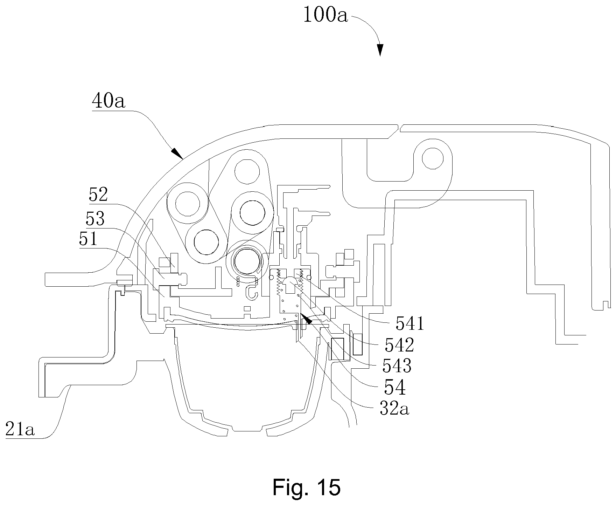

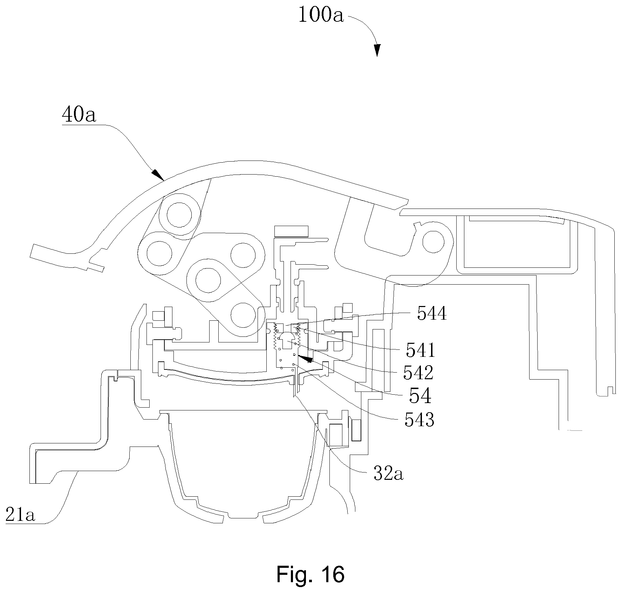

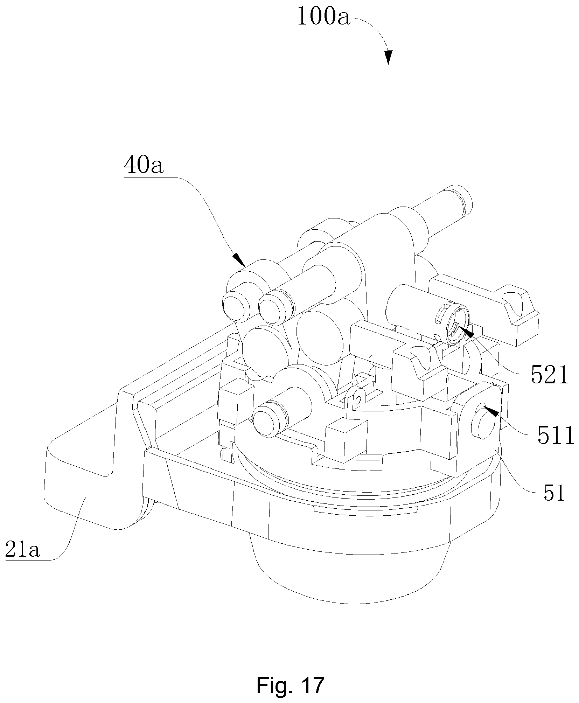

Referring to Fig. 14 to Fig. 17, a beverage preparation device of a second embodiment is provided. The beverage preparation device includes an extraction head 100a containing a frame 10, a capsule holder 20a, a push plate 30a and a closing mechanism 40a. The beverage preparation device of the second embodiment has substantially the same structure as that of the first embodiment, except that the extraction head 100a of the beverage preparation device of the second embodiment further includes a propulsion compensation mechanism 50. The propulsion compensation mechanism 50 is configured for pushing the push plate 30a on the capsule holder 20a when the closing mechanism 40a makes the push plate 30a cover on the capsule holder 20a to improve the sealing property between the capsule holder 20a and the push plate 30a.

The propulsion compensation mechanism 50 includes a first housing 51 and a second housing 52. The first housing 51 is extended upward from a sidewall of the push plate 30a which is away from the capsule holder 20a. The second housing 52 covers the first housing 51 and is connected to the push plate 30a. The first housing 51 and the second housing 52 form a sealed chamber. Part of the first housing 51 is overlapped and connected with part of the second housing 52 by a seal ring.

At least one stop pins 53 can be further disposed between the second housing 52 and the first housing 51, and the stop pins 53 are used to limit a distance between the second housing 52 and the first housing 51 along an axis of the stop pin 53.

In this embodiment, the two stop pins 53 are disposed on opposite sides of the second housing 52. There are two second through holes (not shown) disposed on sidewalls of the second housing 52. The two stop pins 53 pass through the second through holes and disposed on the second housing 52. The size of the second through holes matches the diameter of the stop pins 53. That is, the second housing 52 and the stop pins 53 are fixed to each other. The first housing includes two first through holes 511 corresponding to the second through holes. The stop pins 53 can move for a predetermined distance along the first through holes 511. The size of the first through holes 511 is larger than the diameter of the stop pins 53, that is, the first through holes 511 have an extended length beyond to the diameter of the limiting pin 53, and the stop pins 53 can slide a distance in the through hole 511 along the length direction of the through hole 511. Therefore, the first housing 51 can move downward relative to the second housing 52, thereby achieving the tightening of the first housing 51 onto the second housing 52 during operation of the propulsion compensation mechanism 50. The first housing 51 tightly covers on the capsule holder 20a.

The second housing 52 can further include a water inlet 521. The water inlet 521 is used for connecting to a water injection pipe (not shown). A lancet 32a is located on the first housing 51. The lancets 32a passes through the first housing 51 and extends towards the capsule holder 20a. The first housing 51 further includes an unidirectional pressure-holding seal assembly 54. The unidirectional pressure-holding seal assembly 54 is disposed in a connecting passage between the lancet 32a and the sealed chamber. And the unidirectional pressure-maintaining seal assembly 54 is configured for one-way water injection to the connecting passage and maintaining pressure. When the user operates the extraction head 100a, the water of the water injection pipe will be injected into the sealed chamber through the water inlet 521. Because of the unidirectional pressure-holding seal assembly 54, water injected into the sealed chamber will not directly flow into the brewing chamber, but stay in the sealed chamber and forming a downward pressure on the first housing 51, so that the first housing 51 is tightly pressed against the capsule holder 20a, thereby increasing seal property between the push plate 30a and the capsule holder 20a.

As the water flow is injected, the pressure of the water in the sealed chamber will be gradually increased. When the water flow pressure is greater than a predetermined threshold, the water flow will pushes the unidirectional pressure-holding seal assembly 54 to make the connecting passage between the lancet 32a and the sealed chamber unobstructed, and finally the water injecting into the brewing chamber.

The unidirectional pressure-maintaining seal assembly 54 can include a pressure maintaining screw 541, a check valve seal head 542, and a check valve spring 543. The pressure maintaining screw 541 is screwed in top wall of the first housing 51 and located at up end of connecting passage. The pressure maintaining screw 541 includes a hole 544. The check valve seal head 542 is located adjacent to the hole 544. One end of the check valve spring 543 is connected to the check valve seal head 542 to block the hole 544, and the other end of the check valve spring 543 is fixed to bottom wall of the first housing 51.

The check valve seal head 542 is restrained by the check valve spring 543 and sealed on the hole 544 of the pressure maintaining screw 541, to achieve unidirectional seal of the connecting passage between the lancet 32a and the sealed chamber. When the pressure of the water of the sealed chamber pressing to the check valve seal head 542 is larger than the elastic pressure of the check valve spring 543 limiting to the check valve seal head 542, the water in the sealed chamber will push the check valve seal head 542, so that the hole 544 of the pressure maintaining screw 541 will be opened. That is, the connecting passage of the sealed chamber and the lancet 32a is opened, thereby water injecting into the brewing chamber.

Because the first housing 51 is moved downward for a distance relative to the second housing 52, the first housing 51 needs to be returned, so that the closing mechanism 40a can simultaneously and conveniently lift or press both the second housing 52 and the first housing 51 during the opening or closing of the brewing chamber. Otherwise the removal and insertion of the capsule holder 20 may be affected.

Referring to Fig.14, in order to achieve the return of the first housing 51, the closing mechanism 40a can includes a reset tension spring 46a for pulling the first housing 51 after the first housing 51 covers the capsule holder 20a, to ensures the tightness between the push plate 30a and the capsule holder 20a.

In this embodiment, the guide rail 341a is disposed on the second housing 52 and the micro switch 60a is disposed at the operation panel 21a of the closing mechanism 40a away from the capsule holder 20a. The function of the guide rail 341a and the micro switch 60a is the same as that in the first embodiment, only the installation position changes.

In a word, the closing mechanism 40a of the second embodiment is not the same as the closing mechanism 40 of the first embodiment, but the propulsion compensation mechanism 50 can also be directly disposed in the closing mechanism 40 of the first embodiment and the push plate 30 is provided as a two-layer structure of the first housing 51 and the second housing 52 and a one-way pressure-holding seal assembly 54 is disposed between the first housing 51 and the second housing 52.

In summary, the beverage preparation device 101 provided by the present disclosure has simple structure. Especially, the closing mechanism of the beverage preparation device is simple and easily installed. And it has low cost. Furthermore, users can easily open and close the closing mechanism because of the principle of leverage and is convenient in operation.

## Claims

1. A beverage preparation device, comprising an extraction head (100/100a), the extraction head (100/100a) comprises a frame (10), a capsule holder (20/20a), a push plate (30/30a) and a closing mechanism (40/40a), the capsule holder (20/20a) is disposed on the frame (10), the push plate (30/30a) covers the capsule holder ((20/20a), a brewing chamber is formed between the push plate (30/30a) and the capsule holder (20/20a), and the closing mechanism (40/40a) is connected to the push plate (30/30a), wherein the closing mechanism (40/40a) comprises a flap (41), a crank (412), a connecting assembly (43), and a push shaft (44) fixedly connected to the push plate (30/30a), the crank (412) is disposed on the flap (41), the connecting assembly (43) is rotatably connected to the crank (412), and when the flap (41) is moved, the push shaft (44) moves relative to the capsule holder (20/20a), to seal or open the brewing chamber; **characterized in that**
the push plate (30/30a) comprises at least one lancet (32/32a) extending into the brewing chamber, and the at least one lancet (32/32a) is configured to pierce a capsule located in the brewing chamber;
the extraction head (100/100a) further comprises a propulsion compensation mechanism (50), the propulsion compensation mechanism (50) is configured to push the push plate (30/30a) on the capsule holder (20/20a), the propulsion compensation mechanism (50) comprises a first housing (51) and a second housing (52), the first housing (51) is extended upward from a side of the push plate (30/30a) which is away from the capsule holder (20/20a), the second housing (52) covers the first housing (51) and is connected to the push plate (30/30a), the first housing (51) and the second housing (52) form a sealed chamber, a water inlet (521) is disposed on the second housing (52) and configured for connecting to a water injection pipe, the at least one lancet (32/32a) passes through the first housing (51) and extends towards the capsule holder (20/20a), the first housing (51) further comprises an unidirectional pressure-holding seal assembly (54) which is disposed in a connecting passage between the lancet (32/32a) and the sealed chamber, and the unidirectional pressure-maintaining seal assembly (54) is configured for one-way water injection to the connecting passage and maintaining pressure

2. The beverage preparation device of claim 1, wherein the closing mechanism (40/40a) comprises a pair of rotating convex structure (411) and a rotating shaft (42), the pair of rotating convex structure (411) are symmetrically disposed on an end of the flap (41), the frame (10) comprises a pair of support portion (10a), the rotating shaft (42) is disposed through the pair of rotating convex structure (411) and one end of the crank (412) and fixed to the pair of support portion (10a), and the other end of the crank (412) is connected to the connecting assembly (43).

3. The beverage preparation device of one of the preceding claims, wherein the crank (412) is disposed on the flap (41), and the crank (412) and the flap (41) form an integrity.

4. The beverage preparation device of one of the preceding claims, wherein the connecting assembly (43) comprises a first connecting rod (431), a second connecting rod (432) and a connecting rod shaft (433), the first connecting rod (431) is separated from the second connecting rod (432) and both located on two sides of the crank (412), and rotatably connected to the connecting rod shaft (433).

5. The beverage preparation device of claim 4, wherein the beverage preparation device further comprises a limit block (45) disposed on the frame (10) and located adjacent to back side of the first connecting rod (431) or the second connecting rod (432), and the limit block (45) is configured to limit angle between the first connecting rod (431) and the crank (412) or between the second connecting rod (432) and the crank (412).

6. The beverage preparation device of claim 1, wherein a top of the at least one lancet (32/32a) for piercing the capsule has a shape of bevel.

7. The beverage preparation device of one of the preceding claims, wherein the beverage preparation device further comprises a capsule gasket (31) which is located on a surface of the push plate (30/30a) facing the capsule holder (20/20a), and the capsule gasket (31) is configured to seal the brewing chamber.

8. The beverage preparation device of one of the preceding claims, wherein the beverage preparation device further comprises two sleeves (34) symmetrically fixed on the push plate (30/30a), and two ends of the push shaft (44) are respectively disposed inside the two sleeves (34), to achieve fixation between the push shaft (44) and the push plate (30/30a).

9. The beverage preparation device of one of the claims 2-8, wherein the beverage preparation device further comprises a micro switch (60) fixed on the frame (10) and configured for controlling electrical circuit of water injection to turn off, a paddle (4111) is fixed on one of the pair of rotating convex structure (411), and the paddle (4111) is disposed adjacent to the micro switch (60) and configured to trigger the micro switch (60).

10. The beverage preparation device of claim 1, wherein the unidirectional pressure-maintaining seal assembly (54) comprises a pressure maintaining screw (541) screwed in top wall of the first housing (51) and located at up end of the connecting passage, a check valve seal head (542), and a check valve spring (543), the pressure maintaining screw (541) comprises a hole (544), the check valve seal head (542) is located adjacent to the hole (544), and one end of the check valve spring (543) is connected to the check valve seal head (542) to block the hole (544), and the other end of the check valve spring (543) is fixed to bottom wall of the first housing (51).

11. The beverage preparation device of claim 1 or 10, wherein the extraction head (100/100a) further comprises a reset spring (46a), one end of the reset spring (46a) is connected to the closing mechanism (40/40a), and the other end of the reset spring (46a) is connected to the first housing (51).

12. The beverage preparation device of one of the claims 1-11, wherein the propulsion compensation mechanism (50) further comprises a stop pin (53) which is fixed to the second housing (52) and slidable relative to the first housing (51) by a predetermined distance.

## Patentansprüche

1. Getränkezubereitungsvorrichtung, umfassend einen Extraktionskopf (100/100a), wobei der Extraktionskopf (100/100a) einen Rahmen (10), einen Kapselhalter (20/20a), eine Druckplatte (30/30a) und einen Schließmechanismus (40/40a) umfasst, wobei der Kapselhalter (20/20a) auf dem Rahmen (10) angeordnet ist, die Druckplatte (30/30a) den Kapselhalter ((20/20a) abdeckt, zwischen der Druckplatte (30/30a) und dem Kapselhalter (20/20a) eine Brühkammer gebildet wird, und der Schließmechanismus (40/40a) mit der Druckplatte (30/30a) verbunden ist, wobei der Schließmechanismus (40/40a) eine Klappe (41), ein Hebel (412), eine Verbindungsbaugruppe (43) und eine fest mit der Druckplatte (30/30a) verbundene Drückachse (44) umfasst, wobei der Hebel (412) an der Klappe (41) angeordnet ist, die Verbindungsbaugruppe (43) drehbar mit dem Hebel (412) verbunden ist, und wenn die Klappe (41) bewegt wird, sich die Drückachse (44) relativ zum Kapselhalter (20/20a) bewegt, um die Brühkammer abzudichten oder zu öffnen; **dadurch gekennzeichnet, dass**
die Druckplatte (30/30a) mindestens eine Lanzette (32/32a) umfasst, die sich in die Brühkammer erstreckt, und dass die mindestens eine Lanzette (32/32a) so konfiguriert ist, dass sie eine in der Brühkammer befindliche Kapsel durchstößt;
der Extraktionskopf (100/100a) ferner einen Vortriebsausgleichsmechanismus (50) umfasst, wobei der Vortriebsausgleichsmechanismus (50) so konfiguriert ist, dass er die Druckplatte (30/30a) auf den Kapselhalter (20/20a) drückt, wobei der Vortriebsausgleichsmechanismus (50) ein erstes Gehäuse (51) und ein zweites Gehäuse (52) umfasst, wobei das erste Gehäuse (51) sich von einer Seite der Druckplatte (30/30a), die von dem Kapselhalter (20/20a) entfernt ist, nach oben erstreckt, wobei das zweite Gehäuse (52) das erste Gehäuse (51) abdeckt und mit der Druckplatte (30/30a) verbunden ist, wobei das erste Gehäuse (51) und das zweite Gehäuse (52) eine abgedichtete Kammer bilden, wobei ein Wassereinlass (521) an dem zweiten Gehäuse (52) angeordnet und zum Anschluss an ein Wasserinjektionsrohr konfiguriert ist, wobei die mindestens eine Lanzette (32/32a) durch das erste Gehäuse (51) hindurchgeht und sich in Richtung des Kapselhalters (20/20a) erstreckt, wobei das erste Gehäuse (51) ferner eine unidirektionale druckerhaltende Dichtungsanordnung (54) umfasst, die in einem Verbindungskanal zwischen der Lanzette (32/32a) und der abgedichteten Kammer angeordnet ist, und wobei die unidirektionale druckerhaltende Dichtungsanordnung (54) für eine Einweg-Wasserinjektion in den Verbindungskanal und zur Aufrechterhaltung des Drucks konfiguriert ist

2. Getränkezubereitungsvorrichtung nach Anspruch 1, wobei der Schließmechanismus (40/40a) ein Paar rotierender konvexer Strukturen (411) und eine rotierende Welle (42) umfasst, wobei das Paar rotierender konvexer Strukturen (411) symmetrisch an einem Ende der Klappe (41) angeordnet ist, wobei der Rahmen (10) ein Paar von Stützabschnitten (10a) aufweist, wobei die rotierende Welle (42) durch das Paar von rotierenden konvexen Strukturen (411) und ein Ende des Hebels (412) hindurch angeordnet ist und an dem Paar von Stützabschnitten (10a) befestigt ist, und wobei das andere Ende des Hebels (412) mit der Verbindungsbaugruppe (43) verbunden ist.

3. Getränkezubereitungsvorrichtung nach einem der vorstehenden Ansprüche, wobei der Hebel (412) an der Klappe (41) angeordnet ist und der Hebel (412) und die Klappe (41) eine Einheit bilden.

4. Getränkezubereitungsvorrichtung nach einem der vorhergehenden Ansprüche, wobei die Verbindungsbaugruppe (43) eine erste Pleuelstange (431), eine zweite Pleuelstange (432) und eine Pleuelstangenwelle (433) aufweist, wobei die erste Pleuelstange (431) von der zweiten Pleuelstange (432) getrennt ist und beide auf zwei Seiten des Hebels (412) angeordnet sind und drehbar mit der Pleuelstangenwelle (433) verbunden sind.

5. Getränkezubereitungsvorrichtung nach Anspruch 4, wobei die Getränkezubereitungsvorrichtung ferner einen Begrenzungsblock (45) umfasst, der auf dem Rahmen (10) angeordnet ist und sich neben der Rückseite der ersten Pleuelstange (431) oder der zweiten Pleuelstange (432) befindet, und wobei der Begrenzungsblock (45) so konfiguriert ist, dass er den Winkel zwischen der ersten Pleuelstange (431) und dem Hebel (412) oder zwischen der zweiten Pleuelstange (432) und dem Hebel (412) begrenzt.

6. Getränkezubereitungsvorrichtung nach Anspruch 1, wobei eine Oberseite der mindestens einen Lanzette (32/32a) zum Durchstechen der Kapsel eine abgeschrägte Form aufweist.

7. Getränkezubereitungsvorrichtung nach einem der vorstehenden Ansprüche, wobei die Getränkezubereitungsvorrichtung ferner eine Kapseldichtung (31) umfasst, die auf einer Oberfläche der Druckplatte (30/30a) angeordnet ist, die dem Kapselhalter (20/20a) zugewandt ist, und wobei die Kapseldichtung (31) so konfiguriert ist, dass sie die Brühkammer abdichtet.

8. Getränkezubereitungsvorrichtung nach einem der vorstehenden Ansprüche, wobei die Getränkezubereitungsvorrichtung ferner zwei Hülsen (34) umfasst, die symmetrisch an der Druckplatte (30/30a) befestigt sind, und wobei zwei Enden der Drückachse (44) jeweils innerhalb der beiden Hülsen (34) angeordnet sind, um eine Befestigung zwischen der Drückachse (44) und der Druckplatte (30/30a) zu erreichen.

9. Getränkezubereitungsvorrichtung nach einem der Ansprüche 2-8, wobei die Getränkezubereitungsvorrichtung ferner einen Mikroschalter (60) umfasst, der an dem Rahmen (10) befestigt und so konfiguriert ist, dass er die elektrische Schaltung der Wasserinjektion zum Ausschalten steuert, wobei eine Paddelnasenase (4111) an einer der beiden rotierenden konvexen Strukturen (411) befestigt ist, und wobei die Paddelnase (4111) neben dem Mikroschalter (60) angeordnet und so konfiguriert ist, dass es den Mikroschalter (60) auslöst.

10. Getränkezubereitungsvorrichtung nach Anspruch 1, wobei die unidirektionale druckerhaltende Dichtungsanordnung (54) eine Druckhalteschraube (541) aufweist, die in die obere Wand des ersten Gehäuses (51) eingeschraubt und am oberen Ende des Verbindungsdurchgangs angeordnet ist, einen Rückschlagventil-Dichtkopf (542) und eine Rückschlagventilfeder (543) aufweist, wobei die Druckhalteschraube (541) ein Loch (544) aufweist, wobei der Rückschlagventil-Dichtkopf (542) benachbart zu dem Loch (544) angeordnet ist, und wobei ein Ende der Rückschlagventilfeder (543) mit dem Rückschlagventil-Dichtkopf (542) verbunden ist, um das Loch (544) zu blockieren, und wobei das andere Ende der Rückschlagventilfeder (543) an der Bodenwand des ersten Gehäuses (51) befestigt ist.

11. Getränkezubereitungsvorrichtung nach Anspruch 1 oder 10, wobei der Extraktionskopf (100/100a) ferner eine Rückstellfeder (46a) aufweist, wobei ein Ende der Rückstellfeder (46a) mit dem Schließmechanismus (40/40a) verbunden ist und das andere Ende der Rückstellfeder (46a) mit dem ersten Gehäuse (51) verbunden ist.

12. Getränkezubereitungsvorrichtung nach einem der Ansprüche 1-11, wobei der Vortriebsausgleichsmechanismus (50) ferner einen Anschlagstift (53) aufweist, der an dem zweiten Gehäuse (52) befestigt und relativ zu dem ersten Gehäuse (51) um eine vorbestimmte Strecke verschiebbar ist.

## Revendications

1. Un dispositif de préparation de boisson, comprenant une tête d'extraction (100/100a), la tête d'extraction (100/100a) comprenant un châssis (10), un porte-capsule (20/20a), une plaque de poussée (30/30a) et un mécanisme de fermeture (40/40a), le porte-capsule (20/20a) étant disposé sur le châssis (10), la plaque de poussée (30/30a) recouvrant le porte-capsule (20/20a), une chambre d'infusion étant formée entre le plaque de poussée (30/30a) et le porte-capsule (20/20a), et le mécanisme de fermeture (40/40a) étant relié à la plaque de poussée (30/30a), dans lequel le mécanisme de fermeture (40/40a) comprend un volet (41), une manivelle (412), un ensemble de liaison (43) et un arbre de poussée (44) solidaires de la plaque de poussée (30/30a), la manivelle (412) étant disposée sur le volet (41), l'ensemble de liaison (43) étant relié en rotation à la manivelle (412), et lorsque le volet (41) est déplacé, l'arbre de poussée (44) se déplace par rapport au porte-capsule (20/20a), pour fermer ou ouvrir la chambre d'infusion ; **caractérisé en ce que**
la plaque de poussée (30/30a) comprend au moins une lancette (32 / 32a) s'étendant dans la chambre d'infusion, et la ou les lancette(s) (32/32a) est/sont configurée(s) pour percer une capsule située dans la chambre d'infusion ;
la tête d'extraction (100/100a) comprend en outre un mécanisme de compensation de propulsion (50), le mécanisme de compensation de propulsion (50) est configuré pour pousser la plaque de poussée (30/30a) sur le porte-capsule (20/20a), le mécanisme de compensation de propulsion (50) comprenant un premier boîtier (51) et un second boîtier (52), le premier boîtier (51) étant prolongé vers le haut depuis un côté de la plaque de poussée (30/30a) qui est éloigné du porte-capsule (20/20a), le second boîtier (52) recouvrant le premier boîtier (51) et est relié à la plaque de poussée (30/30a), le premier boîtier (51) et le second boîtier (52) formant une chambre étanche, une entrée d'eau (521) étant disposée sur le second boîtier (52) et configurée pour se connecter à un tuyau d'injection d'eau, le ou les lancette(s) (32/32a) passant à travers le premier boîtier (51) et s'étendant vers le porte-capsule (20/20a), le premier boîtier (51) comprenant en outre un ensemble de joint de maintien de pression unidirectionnel (54) qui est disposé dans un passage de raccordement entre la lancette (32/32a) et la chambre étanche, et l'ensemble de joint de maintien de pression unidirectionnel (54) est configuré pour une injection d'eau unidirectionnelle vers le passage de raccordement et pour maintenir la pression.

2. Le dispositif de préparation de boisson de la revendication 1, dans lequel le mécanisme de fermeture (40/40a) comprend une paire de structure convexe rotative (411) et un arbre rotatif (42), la paire de structure convexe rotative (411) étant disposée symétriquement sur une extrémité du volet (41), le châssis (10) comprenant une paire de parties de support (10a), l'arbre rotatif (42) étant disposé à travers la paire de structure convexe rotative (411) et une extrémité de la manivelle (412) et est fixé à la paire de partie de support (10a), et l'autre extrémité de la manivelle (412) est reliée à l'ensemble de liaison (43).

3. Le dispositif de préparation de boisson de l'une des revendications précédentes, dans lequel la manivelle (412) est disposée sur le volet (41), et la manivelle (412) et le volet (41) forment une intégrité.

4. Le dispositif de préparation de boisson de l'une des revendications précédentes, dans lequel l'ensemble de connexion (43) comprend une première bielle de liaison (431), une seconde bielle de liaison (432) et un arbre de bielle (433), la première bielle (431) est séparée de la seconde bielle (432) et tous deux situés sur deux côtés de la manivelle (412), et reliés en rotation à l'arbre de bielle (433).

5. Le dispositif de préparation de boisson de la revendication 4, dans lequel led dispositif de préparation de boisson comprend un bloc de limite (45) disposé sur le châssis (10) et situé à côté du côté arrière de la première bielle (431) ou de la seconde bielle (432), et le bloc de limite (45) est configuré pour limiter l'angle entre la première bielle (431) et la manivelle (412) ou entre la seconde bielle (432) et la manivelle (412).

6. Le dispositif de préparation de boisson de la revendication 1, dans lequel un sommet d'au moins une lancette (32/32a) pour percer la capsule a une forme de biseau.

7. Le dispositif de préparation de boisson de l'une des revendications précédentes, dans lequel comprenant un joint de capsule (31) qui est situé sur une surface de la plaque de poussée (30/30a) faisant face au porte-capsule (20/20a), et le joint de capsule (31) est configuré pour sceller la chambre d'infusion.

8. Le dispositif de préparation de boisson de l'une des revendications précédentes, dans lequel le dispositif de préparation de boissons comprend deux manchons (34) fixés symétriquement sur la plaque de poussée (30/30a), et deux extrémités de l'arbre de poussée (44) sont respectivement disposées à l'intérieur des deux manchons (34), afin de réaliser la fixation entre l'arbre de poussée (44) et la plaque de poussée (30/30a).

9. Le dispositif de préparation de boisson de l'une des revendications 2-8, dans lequel le dispositif de préparation de boisson comprend un micro-interrupteur (60) fixé sur le châssis (10) et configuré pour commander l'arrêt du circuit électrique d'injection d'eau, une palette (4111) étant fixée sur l'un des paires de structure convexe rotative (411), et la palette (4111) est disposée adjacente au micro-interrupteur (60) et configurée pour déclencher le micro-interrupteur (60).

10. Le dispositif de préparation de boisson de la revendication 1, dans lequel l'ensemble de joint de maintien de pression unidirectionnel (54) comprend une vis de maintien de pression (541) vissée dans la paroi supérieure du premier boîtier (51) et située à l'extrémité supérieure du passage de raccordement, d'une tête d'étanchéité de clapet anti-retour (542) et d'un ressort de clapet anti-retour (543), la vis de maintien de pression (541) comprenant un trou (544), la tête d'étanchéité de clapet anti-retour (542) étant située à côté du trou (544), et une l'extrémité du ressort de clapet anti-retour (543) est reliée à la tête d'étanchéité de clapet anti-retour (542) pour bloquer le trou (544), et l'autre extrémité du ressort de clapet anti-retour (543) est fixée à la paroi inférieure du premier boîtier (51).

11. Le dispositif de préparation de boisson de la revendication 1 ou 10, dans lequel la tête d'extraction (100/100a) comprend en outre un ressort de réinitialisation (46a), une extrémité du ressort de rappel (46a) est reliée au mécanisme de fermeture (40/40a), et l'autre extrémité du ressort de réinitialisation (46a) est reliée au premier boîtier (51).

12. Le dispositif de préparation de boisson de l'une des revendications 1 à 11, dans lequel le mécanisme de compensation de propulsion (50) comprend en outre une goupille d'arrêt (53) qui est fixée au second boîtier (52) et coulissante par rapport au premier boîtier (51) pour une distance prédéterminée.
